Europäisches Patentamt

European Patent Office

Office européen des brevets

(11) Publication number: **0 262 073 B1**

# EUROPEAN PATENT SPECIFICATION

(45) Date of publication of patent specification: 17.04.91 (51) Int. Cl.⁵: **H01M 2/08**, H01G 9/10, H01B 17/30

(21) Application number: 87630159.9

(22) Date of filing: 01.09.87

(54) Terminal pin seal for a hermetic terminal assembly.

(30) Priority: 22.09.86 US 910069

(43) Date of publication of application:
30.03.88 Bulletin 88/13

(45) Publication of the grant of the patent:
17.04.91 Bulletin 91/16

(84) Designated Contracting States:
AT CH DE FR GB IT LI NL

(56) References cited:
EP-A- 0 067 278      FR-A- 2 334 640
GB-A- 1 264 697      GB-A- 2 014 354
US-A- 3 416 964      US-A- 3 876 437
US-A- 4 279 975      US-A- 4 308 323
US-A- 4 315 974

PATENT ABSTRACTS OF JAPAN, vol. 9, no.
230 (E-343) [1953], 17th September 1985; &
JP-A-60 86 755 (KIYOSHI NAGAI) 16-05-1985

IDEM

(73) Proprietor: EMERSON ELECTRIC CO.
8100 W. Florissant Avenue
St. Louis Missouri 63136(US)

(72) Inventor: Teaford, Richard Lee
2065 Sutton Avenue
Cincinnati Ohio 45230(US)
Inventor: Honkomp, Glenn Anthony
9700 Maineville Road
Loveland Ohio 45140(US).
Inventor: Hall, Donald Harold
6921 Lynnfield Court
Cincinnati Ohio 45243(US)

(74) Representative: Weydert, Robert et al
OFFICE DENNEMEYER S.à.r.l. P.O. Box 1502
L-1015 Luxembourg(LU)

N.T.I.S. TECH NOTES, no. 7, Part C, July 1985, page 767, Springfield, Virginia, US; SANDIA NATIONAL LABORATORIES: "A long-life lithium/sulfur dioxide battery"

PATENT ABSTRACTS OF JAPAN, vol. 9, no. 69 (E-305) [1792], 29th March 1985; & JP-A-59 207 557 (NIHON DENCHI K.K.) 24-11-1984

N.T.I.S. TECH NOTES, PB83-925 307, July 1983, Springfield, US; US DEPARTMENT OF ENERGY NTN 83-0458: "Glass for sealing lithium cells"

## Description

The present invention relates to an hermetic lithium battery terminal assembly having a terminal pin extending from within the assembly through an apertured assembly wall to ambient and an aperture seal structure between the pin and the assembly wall and sealingly bonded thereto, the seal structure having a first glass material and a second glass material having a different composition and electrochemical properties than the first glass material.

It is generally well known in the electrical terminal assembly art to utilize layers of differing materials to seal a terminal pin to a housing. An hermetic lithium battery terminal assembly of the type referred to is disclosed in US-A- 4,308,323. In the known terminal assembly first and second glass materials surround and extend coaxially relative each other and a terminal pin extends from within a battery through the battery wall, the first material being bonded to the pin and the second material being bonded to the first material and the wall, the object of the differing coextensive first and second materials being to provide an overall seal which exhibits a greater resistance to attack by chemicals than by an individual or sole material. More recently issued US-A- 4,514,590 employs terminal pin sealing layers of different materials, each of which generally extends in planar, sandwich form with the others normal to the longitudinal axis of the pin between the pin and the housing, the layers of different materials having different coefficients of thermal expansion to compensate for stresses in the terminal assembly as a result of temperature changes. In GB-A-1,264,697 a laminated glass stem for use in electronic devices is disclosed. The glass stem comprises a glass body and a glass layer of different composition is provided on one side of the glass body to improve the fluid tightness in an atmosphere of high temperature and humidity. The coefficients of expansion of the materials of the glass body and of the glass layer are different. In US-A- 4,315,974 the inner surfaces of a glass seal are shielded by a ceramic body to protect the glass seal against chemical attack by the contents of an electrochemical cell.

The present invention recognizes that different electrochemical conditions exist within and outside a hermetically sealed assembly, then solves this recognized problem in sealing terminal pins in hermetically sealed assemblies in a unique and novel manner, requiring a minimum of materials and processing steps in both straight-forward and efficient manufacture and assembly steps and, at the same time, assuring a long lasting terminal pin seal both internally and externally of the hermetic assembly. The structure of the present invention accomplishes this without sacrifice of chemical integrity and stability of the seal, providing a terminal pin seal structure resistant to recognized differing conditions of humidity and corrosion without undesirable bubbles and pockets therein and with controlled seal stress conditions, utilizing these controlled stress conditions for a more efficient and effective seal through regulated material viscosity and compression characteristics.

In accordance with the present invention to achieve this the hermetic lithium battery terminal assembly is characterized in that the seal structure comprises a first and a second layer both having planar inner and outer surfaces both said layers extending between and being sealingly bonded to the terminal pin and the assembly wall, the second layer having its outer surface exposed to ambient, the first layer consisting of the first glass material which is comprised approximately by weight of 10 to 45 % $SiO_2$, 10 to 25 % $B_2O_3$, 3 to 10 % $Al_2O_3$, 2 to 10 % $La_2O_3$, 10 to 30 % light metal oxides of the second group in the periodic chemical table and 5 to 25 % light metal oxides of the first group in the periodic chemical table and the second layer consisting of the second glass material which is comprised approximately by weight of 50 to 65 % $SiO_2$, 4 to 12 % $B_2O_3$, 1 to 5 % $Al_2O_3$, 5 to 15 % light metal oxides of the second group in the periodic chemical table and 5 to 20 % light metal oxides of the first group of the periodic chemical table to thereby provide similar viscosities and coefficients of expansion for the first and second layers which coefficients of expansion are compatible with that of the materials to which the layers are sealingly bonded.

A third layer can be interposed between the first and second layers to form an inhibiting shield to restrict flow of undesirable deteriorating properties between the first and second laminations.

Referring to the drawing which discloses an advantageous embodiment of the hermetic lithium battery terminal assembly and a modified embodiment thereof:

Figure 1 is a plan view of a unique and novel end closure having an aperture therein and an extended peripheral wall portion integral therewith to surround the aperture, the end closure being disposed in a housing for an hermetic terminal assembly;

Figure 2 is a cross-sectional view taken in a plane through line 2-2 of Figure 1 showing the upper portion of the housing and end closure;

Figure 3 is an enlarged cross-sectional view of a portion of the end closure of Figures 1 and 2, disclosing the inventive seal structure for a terminal pin extending over the aperture of the end closure; and,

Figure 4 is an enlarged cross-sectional view similar to that of Figure 3, disclosing another form of the inventive seal structure employed with a conventional apertured end closure.

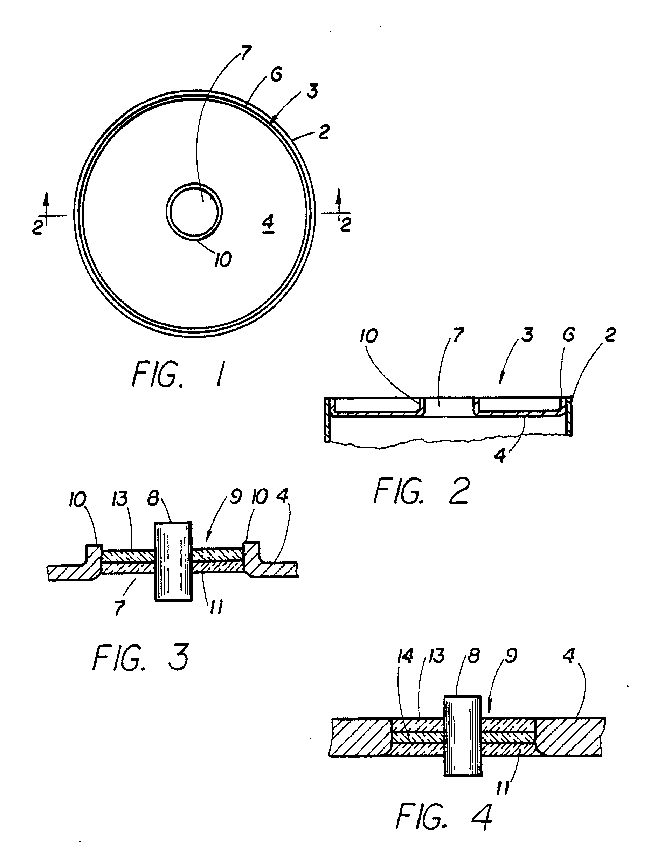

Referring to Figures 1 and 2 of the drawing, and hermetic terminal assembly housing 2 is shown having mounted therein end closure 3 including a circular main body portion 4 having a rim 6 extending from the periphery thereof. Rim 6 of end closure 3 can be sealed to the inner wall of housing 2 by a suitable welding means such as a laser beam (not shown). Main body portion 4 of end closure 3 includes a centrally disposed circular aperture 7 through which electrically conductive terminal pin 8 extends from housing 2 to ambient. The structural components comprising housing 2 and end closure 3, which can be employed in any one of a number of types of hermetic terminal assemblies, such as those used for lithium type batteries, can be formed from a suitable stainless steel material, as can electrically conductive terminal pin 8, the chemistry of the materials used for these components being interdependent with the chemistry of the seal to be employed. In the embodiment of Figures 1-3, the end closure 3 is disclosed as including a main body portion 4 which can be thin and an integral peripheral wall portion 10 surrounding aperture 7 to extend at a preselected angle therefrom for a preselected distance. In the structural embodiment of Figure 2, peripheral wall 10 extends substantially normal to main body portion 4 for a distance substantially equal to rim 6. It is to be understood that other geometric configurations for the several parts disclosed herein can be employed and that the end closure can have other conformations and can have no more than one terminal pin extending therethrough, depending upon the nature of use of the hermetic terminal assembly.

Referring to Figure 3 of the drawing, the seal 9 is disclosed as extending in aperture 7 between the outer peripheral wall of terminal pin 8 and the aperture defining wall portion 10 extending from main body portion 4 of end closure 3, but in this regard, it is to be understood that a suitable apertured steel eyelet can be employed to be sealed in the aperture 7 of the main body portion 4 if so desired. In accordance with one advantageous embodiment of the present invention (Figure 3), seal 9 is composed of two sealing layers or laminations 11 and 13, each having inner and outer surfaces, each extending between the terminal pin 8 and the end closure main body portion 6 in a plane normal to the longitudinal axis of terminal pin 8. Sealing laminations 11 and 13 are selected from suitable sealing materials, such as glass, to have different electrochemical properties, the composition of the materials depending upon the chemical compositions of the material used for terminal pin 8 and main body portion 4 of end closure 3 and also with the chemical conditions of the terminal assembly and the ambient surrounding.

It is desirable that lamination 11, which has its inner surface adjacent the assembly structure in housing 2, be formed from material having electrochemical properties capable of producing a preselected resistance to attack from chemical ingredients within the assembly. Equally it is desirable that lamination 13 be formed from material different from the material of lamination 11, so that the outer surface of lamination 13 adjacent ambient has electrochemical properties capable of producing a preselected resistance to attack, such as corrosion, from ambient chemistry. It is further desirable that in selecting the chemistry of seal laminations 11 and 13 that the flow viscosity and coefficient of expansion characteristics of each during fusing conditions be similar and that their coefficients of expansion be compatible with the coefficients of expansion of the materials forming the terminal pins and main portion of the end closure so that the resulting overall seal formed by the laminations be in compression after the melt forming step involved in sealing the terminal pin to the assembly. It is to be noted that to improve bonding prior to assembly, the surfaces of the preselected glass beads used to form laminations 11 and 13 can be appropriately treated with oxides or etched, as can the material to which they are sealed.

Glass materials of different electrochemical properties can be successfully employed with the $SiO_2$ content by weight for lamination 11, which has its inner surface adjacent the assembly, being substantially less than $SiO_2$ content in lamination 13, which lamination 13 has its outer surface adjacent ambient. This difference serves to increase the chemical resistance of the exposed surface of each lamination to the particular environment to which it is exposed, lamination 11 to the assembly and lamination 13 to ambient.

Lamination 11 closest to the hermetic terminal assembly electrolyte is comprised approximately by weight chemically of 10 to 45 % $SiO_2$, 10 to 25% $B_2O_3$, 3 to 10% $Al_2O_3$, 2 to 10% $La_2O_3$, 10 to 30% light metal oxides of the second group in the periodic chemical table comprising MgO, CaO, SrO and BaO and 5 to 25% light metal oxides of the first group in the periodic chemical table comprising $LiO_2$, $Na_2O$ and $K_2O$. Lamination 13 is comprised approximately by weight of 50 to 65% $SiO_2$, 4 to 12% $B_2O_3$, 1 to 5% $Al_2O_3$, 5 to 15% light metal oxides of the second group in the periodic chemical table comprising CaO, SrO and BaO and 5 to 20% light metal oxides of the first group in the periodic chemical table comprising $LiO_2$, $Na_2O$ and $K_2O$. It is to be noted that both the flow viscosity and coefficient of expansion characteristics of each of these laminations 11 and 13, having the aforedescribed chemical compositions, are substantially similar and that these coefficients of expansion are so selected to be compatible with the coefficients of expansion of adjacent metallic materials, such as 446 stainless steel material used for terminal pins and 304L stainless steel used for eyelets and end covers. Thus the bonding of the lamination 11 and 13 is enhanced at fusion and the overall seal 9 is compressed between the terminal pin 8 and the main body portion 4 of end closure 3.

Referring to Figure 4, a further embodiment of the present invention can be seen, wherein there is sandwiched between laminations 11 and 13 of seal 9, an intermediate layer or lamination 14 which lamination can be of a suitable ceramic material serving to inhibit corrosion migration between the two laminations 11 and 13. It is to be understood that the chemistry of this intermediate ceramic lamination 14 is so selected that the coefficient of expansion characteristics are similar to the coefficient of expansion characteristics of laminations 11 and 13 and that this ceramic lamination 14 has porosity characteristics which enhance the bonding of the surrounding laminations 11 and 13 thereto during the heat fusion step in assembly.

## Claims

1. Hermetic lithium battery terminal assembly having a terminal pin (8) extending from within the assembly through an apertured assembly wall to ambiant and an aperture seal structure (9) between the pin (8) and the assembly wall and sealingly bonded thereto, said seal structure (9) having a first glass material and a second glass material having a different composition and electrochemical properties than said first glass material, characterized in that said seal structure (9) comprises a first and a second layer (11, 13) both having planar inner and outer surfaces, both said layers extending between and being sealingly bonded to the terminal pin (8) and said assembly wall, said second layer (13) having its outer surface exposed to ambiant, said first layer (11) consisting of said first glass material which is comprised approximately by weight of 10 to 45 % $SiO_2$, 10 to 25 % $B_2O_3$, 3 to 10 % $Al_2O_3$, 2 to 10 % $La_2O_3$, 10 to 30 % light metal oxides of the second group in the periodic chemical table and 5 to 25 % light metal oxides of the first group in the periodic chemical table and said second layer (13) consisting of said second glass material which is comprised approximately by weight of 50 to 65 % $SiO_2$, 4 to 12 % $B_2O_3$, 1 to 5 % $Al_2O_3$, 5 to 15 % light metal oxides of the second group in the periodic chemical table and 5 to 20 % light metal oxides of the first group of the periodic chemical table to thereby provide similar viscosities and coefficients of expansion for said first and second layers (11, 13) which coefficients of expansion are compatible with that of the materials to which the layers (11, 13) are sealingly bonded.

2. Terminal assembly according to claim 1, characterized in that the first glass layer light metal oxides of the second group comprise MgO, CaO, SrO and BaO and of the first group comprise $LiO_2$, $Na_2O$ and $K_2O$ and the second glass layer light metal oxides of the second group comprise CaO, SrO and BaO and of the first group comprise $LiO_2$, $Na_2O$ and $K_2O$.

3. Terminal assembly according to claim 1 or 2, characterized in that the inner surface of said second layer (13) abouts the outer surface of said first layer (11).

4. Terminal assembly according to claim 1 or 2, characterized in that an intermediate layer (14) is disposed between said first and second layers (11, 13) to inhibit corrosion migration therebetween.

5. Terminal assembly according to claim 4, characterized in that said intermediate layer (14) is a ceramic layer.

## Revendications

1. Ensemble de borne hermétique pour pile au lithium présentant une tige de borne (8) passant, à partir de l'intérieur de l'ensemble, à travers une ouverture de la paroi de l'ensemble vers l'air libre ambiant, ainsi qu'une structure de joint d'étanchéité (9) de l'ouverture entre la tige (8) et la paroi de l'ensemble, liée de façon étanche à celle-ci, ladite structure de joint d'étanchéité (9) présentant un premier matériau du type verre et un second matériau du type verre ayant une composition et des propriétés électrochimiques différentes de celles dudit premier matériau de type verre, caractérisé en ce que la structure de joint d'étanchéité (9) comprend une première couche et une seconde couche (11,13), ayant toutes les deux des surfaces planes interne et externe, ces deux couches s'étendant entre la tige de borne (8) et la paroi de l'ensemble et étant liée de façon étanche à ces dernières, la seconde couche (13) présentant sa surface externe exposée à l'air libre ambiant, la première couche (11) étant constituée du premier matériau de type verre qui comprend approximativement, en poids, 10 à 45% de $SiO_2$, 10 à 25% de $B_2O_3$, 3 à 10% de $Al_2O_3$, 2 à 10% de $La_2O_3$, 10 à 30% d'oxydes de métaux légers du second groupe de la table périodique des éléments et 5 à 25% d'oxydes de métaux légers du premier groupe de la table périodique des éléments et la seconde couche (13) étant constituée du second matériau de type verre qui comprend approximativement, en poids, de 50 à 65% de $SiO_2$, 4 à 12% de $B_2O_3$, 1 à 5% de $Al_2O_3$, 5 à 15% d'oxydes de métaux légers du second groupe de la table périodique des éléments et 5 à 20% d'oxydes de métaux légers du premier groupe de la table périodique des éléments, pour fournir ainsi des viscosités et des coefficients de dilatation similaires pour la première et la seconde couche (11,13), ces coefficients de dilatation étant compatibles avec ceux des matériaux auxquels les couches (11,13) sont liées de façon étanche.

2. Ensemble de borne selon la revendication 1 caractérisé en ce que les oxydes de métaux légers du second groupe de la première couche de matériau de type verre comprennent MgO, GaO, SrO et BaO et ceux du premier groupe comprennent $LiO_2$, $Na_2O$ et $K_2O$ et les oxydes de métaux légers du second groupe de la seconde couche de matériau de type verre comprennent CaO, SrO et BaO et ceux du premier groupe comprennent $LiO_2$, $Na_2O$ et $K_2O$.

3. Ensemble de borne selon la revendication 1 ou 2 caractérisé en ce que la surface interne de la seconde couche (13) aboutit à la surface externe de la première couche (11).

4. Ensemble de borne selon la revendication 1 ou 2 caractérisé en ce qu'une couche intermédiaire (14) est disposée entre la première couche et la seconde couche (11,13) pour inhiber une migration de la corrosion entre elles.

5. Ensemble de borne selon la revendication 4 caractérisé en ce que ladite couche intermédiaire (14) est une couche de céramique.

**Ansprüche**

1. Hermetische Lithiumbatterieanschlußvorrichtung, die einen Anschlußstift (8), der sich aus dem Inneren der Vorrichtung durch eine mit Loch versehene Vorrichtungswand nach außen erstreckt, und eine Lochdichteinrichtung (9) zwischen dem Stift (8) und der Vorrichtungswand und in Dichtverbindung mit denselben hat, wobei die Dichteinrichtung (9) ein erstes Glasmaterial und ein zweites Glasmaterial mit anderer Zusammensetzung und anderen elektrochemischen Eigenschaften als das erste Glasmaterial hat, dadurch gekennzeichnet, daß die Dichteinrichtung (9) eine erste und eine zweite Schicht (11, 13) aufweist, die beide eine ebene innere und eine ebene äußere Fläche haben, wobei sich beide Schichten zwischen dem Anschlußstift (8) und der Vorrichtungswand erstrecken und mit diesen in Dichtverbindung sind, wobei die zweite Schicht (13) mit ihrer äußeren Oberfläche nach außen hin freiliegt, wobei die erste Schicht (11) aus dem ersten Glasmaterial besteht, welches gewichtsmäßig etwa aus 10 bis 45 % $SiO_2$, 10 bis 25 % $B_2O_3$, 3 bis 10 % $Al_2O_3$, 2 bis 10 % $La_2O_3$, 10 bis 30 % Leichtmetalloxiden der zweiten Gruppe in der Tabelle des Periodensystems der chemischen Elemente und 5 bis 25 % Leichtmetalloxiden der ersten Gruppe in der Tabelle des Periodensystems der chemischen Elemente besteht, und wobei die zweite Schicht (13) aus dem zweiten Glasmaterial besteht, das gewichtsmäßig etwa aus 50 bis 65 % $SiO_2$, 4 bis 12 % $B_2O_3$, 1 bis 5 % $Al_2O_3$, 5 bis 15 % Leichtmetalloxiden der zweiten Gruppe in der Tabelle des Periodensystems der chemischen Elemente und 5 bis 20 % Leichtmetalloxiden der ersten Gruppe in der Tabelle des Periodensystems der chemischen Elemente besteht, um dadurch gleichartige Viskositäten und Ausdehnungskoeffizienten für die erste und die zweite Schicht (11, 13) zu schaffen, wobei die Ausdehnungskoeffizienten mit denen der Materialien kompatibel sind, mit denen die Schichten (11, 13) in Dichtverbindung sind.

2. Anschlußvorrichtung nach Anspruch 1, dadurch gekennzeichnet, daß die in der ersten Glasschicht enthaltenen Leichtmetalloxide der zweiten Gruppe MgO, CaO, SrO und BaO und die der ersten Gruppe $LiO_2$, $Na_2O$ und $K_2O$ umfassen und daß die in der zweiten Glasschicht enthaltenen Metalloxide der zweiten Gruppe CaO, SrO und BaO und die der ersten Gruppe $LiO_2$, $Na_2O$ und $K_2O$ umfassen.

3. Anschlußvorrichtung nach Anspruch 1 oder 2, dadurch gekennzeichnet, daß die innere Oberfläche der zweiten Schicht (13) an der äußeren Oberfläche der ersten Schicht (11) anliegt.

4. Anschlußvorrichtung nach Anspruch 1 oder 2, dadurch gekennzeichnet, daß eine zwischenschicht (14) zwischen der ersten und der zweiten Schicht (11, 13) angeordnet ist, um Korrosionswanderung zwischen denselben zu verhindern.

5. Anschlußvorrichtung nach Anspruch 4, dadurch gekennzeichnet, daß die Zwischenschicht (14) eine Keramikschicht ist.

FIG. 1

FIG. 2

FIG. 3

FIG. 4